# EUROPÄISCHE PATENTSCHRIFT

(11) **EP 3 463 837 B1**
(45) Veröffentlichungstag und Bekanntmachung des Hinweises auf die Patenterteilung: **06.07.2022**
(21) Anmeldenummer: 17724776.4
(22) Anmeldetag: 08.05.2017
(51) Int. Cl.: B29D 30/06, B29C 33/10

(54) **ENTLÜFTUNGSEINHEIT FÜR EINE VULKANISATIONSFORM EINES FAHRZEUGLUFTREIFENS**
MATRIX FOR A TIRE MOULD, TIRE MOULD AND METHOD OF MANUFACTURING
MATRICE DE MOULE DE PNEU, MOULE DE PNEU ET PROCÉDÉ DE FABRICATION

(30) Priorität: 06.06.2016 DE 102016209910
(43) Veröffentlichungstag der Anmeldung: 10.04.2019
(73) Patentinhaber: Continental Reifen Deutschland GmbH, 30165 Hannover (DE)
(72) Erfinder: HASSELLÖF, Magnus, 30966 Hemmingen (DE); DZICK, Jürgen, 30926 Seelze (DE)
(74) Vertreter: Continental Corporation
(86) Internationale Anmeldenummer: PCT/EP2017/060853
(87) Internationale Veröffentlichungsnummer: WO 2017/211516

(56) Entgegenhaltungen:
- EP-A2- 1 380 397
- WO-A1-2008/136904
- WO-A2-2007/084087
- WO-A2-2007/100308
- DE-A1-102009 059 253
- DE-A1-102012 106 809
- JP-A- S6 297 807
- KR-A- 20150 133 279
- US-A- 4 436 497
- US-A1- 2010 230 019

## Beschreibung

Die Erfindung betrifft eine Entlüftungseinheit für eine Vulkanisationsform eines Fahrzeugluftreifens mit einer zentralen Mittellängsachse, einem zylindrischen Gehäuse und einem im Gehäuse positionierten und gegenüber diesem beweglichen Ventileinsatz, welcher einen Ventilschaft mit einem Ventilteller und eine den Ventilschaft umgebende Schraubendruckfeder aufweist, welche mit ihrem einen Ende am Gehäuse und mit ihrem anderen Ende am Ventilteller abgestützt ist, wobei das Gehäuse durch Presssitz in einer Entlüftungsbohrung der Vulkanisationsform verankerbar ist.

Es ist bekannt und üblich, dass sich in Vulkanisationsformen für Fahrzeugluftreifen, insbesondere für Personenkraftwagen, im Durchschnitt etwa 4500 Entlüftungsbohrungen mit gleich vielen, in diese eingesetzten Entlüftungseinheiten befinden. Die Entlüftungseinheiten enthalten Ventileinsätze, deren Ventilteller bei eingeformten Reifenrohling die Entlüftungsbohrungen verschließen und das Entstehen von Gummiaustrieben während der Vulkanisation des Reifens zumindest weitgehend verhindern. Während des Einformens des Reifenrohlings sind die Ventileinsätze geöffnet, die Ventilteller stehen an der Forminnenseite über, sodass die erforderliche Entlüftung während des Einformens des Reifenrohlings stattfinden kann. Eine Entlüftungseinheit der eingangs genannten Art ist beispielsweise aus der EP 0 774 333 B1 bekannt. Das zylindrische Gehäuse dieser bekannten Entlüftungseinheit weist einen Außendurchmesser auf, welcher an den Innendurchmesser der Entlüftungsbohrung derart angepasst ist, dass das komplette Gehäuse der Entlüftungseinheit durch Presssitz in die jeweilige Entlüftungsbohrung eingesetzt werden kann. Dazu müssen relativ hohe Kräfte aufgebracht werden, die lediglich eine manuelle Befestigung der Entlüftungseinheiten in den Entlüftungsbohrungen ermöglichen. Diese kraftaufwändige Art der Verankerung der Entlüftungseinheiten kann dazu führen, dass die Bohrungswände beschädigt werden, insbesondere wenn die Entlüftungseinheiten versehentlich außermittig eingesetzt werden.

Aus der DE 10 2012 106 809 A1 sind eine Vorrichtung und ein Verfahren zur Unterstützung des Entformens eines vulkanisierten Fahrzeugluftreifens aus einer Vulkanisationsform bekannt. Unmittelbar vor dem Öffnen der Vulkanisationsform wird durch in den Formsegmenten ausgebildete Entlüftungsbohrungen in Richtung vulkanisiertem Reifen unter Druck ein gasförmiges Medium in ein im Formsegment ausgebildetes Entlüftungskanalnetz geleitet.

Aus der KR 2015 013 327 9 A ist eine Entlüftungseinheit mit einem einen Ventilteller aufweisenden Ventileinsatz bekannt. An der Außenseite des Ventiltellers ist eine kuppelartige Erhebung ausgebildet, welche den Ventilteller beschwert, wodurch sich das Ventil nach der Entlüftung schneller schließen soll.

Die EP 1 380 397 A2 offenbart eine Entlüftungseinheit mit einem Gehäuse und einer Feder, wobei der Innendurchmesser des Gehäuses in Richtung zur Außenseite der Vulkanisationsform bzw. des Formsegments kontinuierlich abnimmt. Eine solche Entlüftungseinheit soll eine effektive Formentlüftung ermöglichen.

Aus der WO 2007 084 087 A2 ist eine weitere Entlüftungseinheit mit einem Gehäuse und einer Feder bekannt. Die Entlüftungseinheit weist einen Ventileinsatz auf, welcher mit dem Gehäuse verschraubt ist.

Ferner offenbart auch die WO 2007 100 308 A2 eine Entlüftungseinheit mit einem Gehäuse, einem Ventileinsatz und einer Feder. Das Gehäuse weist in seinem - im in der Entlüftungsbohrung eingesetzten Zustand der Entlüftungseinheit - inneren Endbereich einen Vorsprung mit einer umlaufende Schrägfläche auf. An dieser Schrägfläche ist der Ventileinsatz über eine an seinem Endabschnitt gegensinnig geneigte umlaufende Schrägfläche abstützbar.

Die zum Einsetzen der Entlüftungseinheiten aufzubringenden hohen Kräfte gestatten ferner oft keine exakte und genaue Positionierung des Gehäuses relativ zur Forminnenseite, was jedoch erforderlich ist, um eine einwandfreie Funktionsweise der Entlüftungseinheiten und eine optimale Ausbildung der Außenseite des Laufstreifens des Fahrzeugluftreifens zu gewährleisten.

Der Erfindung liegt somit die Aufgabe zu Grunde, eine Entlüftungseinheit der eingangs genannten Art diesbezüglich zu verbessern, insbesondere um einen exakten und optimalen Sitz der Entlüftungseinheiten in den Entlüftungsbohrungen sicherzustellen und um ein Einsetzen der Entlüftungseinheiten auch mit einem automatisch betätigten Werkzeug zu ermöglichen.

Gelöst wird die gestellte Aufgabe erfindungsgemäß dadurch, dass das Gehäuse an seiner Außenseite mehrere zylindrische Abschnitte aufweist, welche sich insgesamt über 30% bis 45% der Gehäuselänge erstrecken und mittels welchen das Gehäuse durch Presssitz in der Entlüftungsbohrung verankerbar ist.

Es wurde festgestellt, dass es für einen sicheren Sitz des Gehäuses der Entlüftungseinheit in der Entlüftungsbohrung ausreichend ist, das Gehäuse lediglich über einen Abschnitt seiner Erstreckung in der Entlüftungsbohrung durch Presssitz in der Entlüftungsbohrungswand zu verankern. Das Einpressen erfordert somit einen wesentlich geringeren Kraftaufwand als das Einpressen von Entlüftungseinheiten nach dem Stand der Technik. Dadurch lassen sich Beschädigungen der Bohrungswände wirkungsvoll vermeiden, der Zeitaufwand zum Einsetzen ist deutlich geringer und es ist auch die Möglichkeit eröffnet, erfindungsgemäß ausgeführte Entlüftungseinheiten automatisch mit einem entsprechenden Werkzeug in die Entlüftungsbohrungen einsetzen zu können. Die erfindungsgemäße Variante bietet den Vorteil einer Verteilung der Presssitzflächen über einen größeren Bereich des Gehäuses.

Bei einer bevorzugten Ausführungsvariante ist einer der zylindrischen Abschnitte ein am äußeren Ende des Gehäuses umlaufender Randabschnitt, dessen Länge mindestens 1,0 mm beträgt.

Von besonderem Vorteil ist eine Ausführungsform des Gehäuses, bei welcher dieses einen an seinem inneren Ende unmittelbar anschließenden zylindrischen Abschnitt aufweist, dessen Außendurchmesser geringer ist als der Außendurchmesser jener Abschnitte, mittels welchen das Gehäuse durch Presssitz in der Entlüftungsbohrung verankerbar ist. Besonders vorteilhaft ist dabei, wenn der dieser innere zylindrische Abschnitt eine Länge von mindestens 30 % der Gehäuselänge aufweist. Mit diesem Abschnitt kann das Gehäuse in der Entlüftungsbohrung zentriert vorpositioniert werden. Es ist daher von Vorteil, wenn der innere zylindrische Abschnitt einen um 0,2 mm bis 0,5 mm kleineren Außendurchmesser aufweist als jene Abschnitte, mittels welchen das Gehäuse durch Presssitz in der Entlüftungsbohrung verankerbar ist.

Bei einer Ausführungsform des Gehäuses mit mehreren durch Presssitz in der Entlüftungsbohrung verankerbaren zylindrischen Abschnitten ist zwischen diesen Abschnitten jeweils ein weiterer Abschnitt vorgesehen, dessen Außendurchmesser geringer ist als der Außendurchmesser der äußeren Abschnitte und insbesondere dem Außendurchmesser des inneren Abschnittes entspricht.

Um ein Verhaken des Gehäuses am forminnenseitigen Rand der Entlüftungsbohrung beim Übergangsbereich vom inneren Abschnitt zum anschließenden äußeren Abschnitt des Gehäuses zu vermeiden, sind diese Abschnitte vorzugsweise über eine umlaufende Schrägfläche miteinander verbunden, welche zur Mittellängsachse der Entlüftungseinheit unter einem Winkel von 10° bis 60°, insbesondere unter einem Winkel von 15° bis 45°, verläuft.

Das Vorpositionieren des Gehäuses durch Einsetzen des inneren Abschnittes in die Entlüftungsbohrung lässt sich durch eine am inneren Ende des inneren Abschnittes des Gehäuses außenseitig vorgesehene Schrägfläche erleichtern, die unter einem Winkel von 10° bis 60°, insbesondere unter einem Winkel von 15° bis 45° zur Mittellängsachse der Entlüftungseinheit verläuft.

Weitere Merkmale, Vorteile und Einzelheiten der Erfindung werden nun anhand der Zeichnung näher beschrieben. Dabei zeigen
Fig. 1a und 1b schematisch Schnittdarstellungen eines Teilbereiches eines Formsegmentes einer Vulkanisationsform,
Fig. 2 einen Längsschnitt einer Ausführungsvariante einer erfindungsgemäß ausgeführten Entlüftungseinheit,
Fig. 3a und Fig. 4 Schnittdarstellungen einzelner Bestandteile der Entlüftungseinheit gemäß Fig. 2, Fig. 3b eine Variante der Fig. 3a und
Fig. 5 und Fig. 6 Ausführungsvarianten der Ausgestaltung eines Ventiltellers.

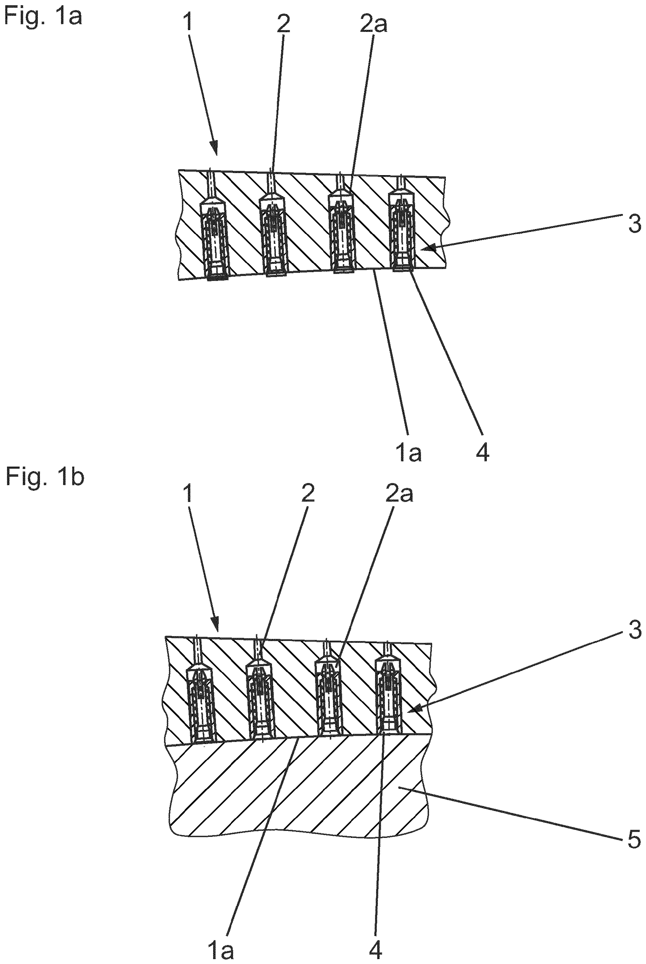

Fig. 1a und 1b zeigen Schnittdarstellungen eines Teiles eines Formsegmentes 1 einer Vulkanisationsform, die, wie es üblich ist, durch den den Laufstreifenbereich formenden Teil radial in eine Anzahl von Formsegmenten, wobei insbesondere zwischen sieben und dreizehn Formsegmente vorgesehen sind, geteilt ist. Die Schnitte durch das Formsegment 1 zeigen ferner eine Anzahl von Längsschnitten durch Entlüftungsbohrungen 2, welche in radialer Richtung orientiert sind und bei der gezeigten Ausführung an der Formsegmentinnenseite 1a jeweils einen Abschnitt 2a mit einem größeren Durchmesser aufweisen. In jedem Abschnitt 2a ist eine Entlüftungseinheit 3 eingesetzt. Die Entlüftungseinheiten 3 sind in der in Fig. 1a gezeigten Darstellung - ohne eingeformten Reifenrohling - sämtlich geöffnet, wobei Feder beaufschlagte Ventilteller 4 etwas über die Formsegmentinnenseite 1a überstehen und in die Vulkanisationsformkaverne ragen. Fig. 1b zeigt in analoger Darstellungsweise zu Fig. 1a den Moment, wo gegen Ende des Einformens eines Reifenrohlings sein den Laufstreifen 5 abformender Teil mit der Formsegmentinnenseite 1a in Kontakt gekommen ist, sodass der rohe Laufstreifen 5 die Ventilteller 4 in die in Fig. 1b gezeigte geschlossene Stellung gedrückt haben.

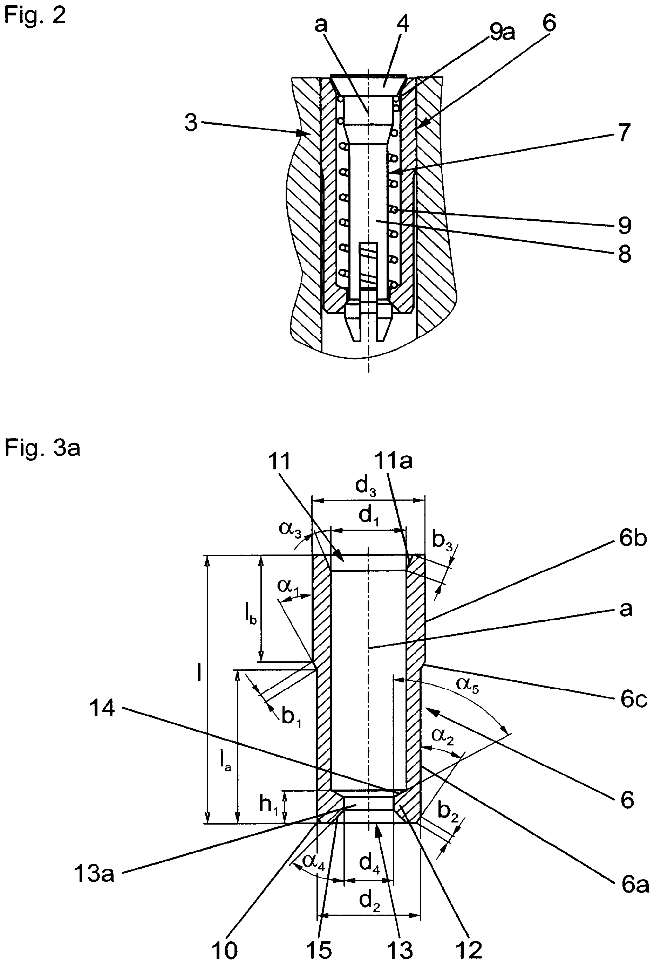

Fig. 2 zeigt in der gleichen Schnittebene wie die Figuren 1a und 1b in vergrößerter Darstellung eine einzelne Entlüftungseinheit 3, welche ein Gehäuse 6, einen Ventileinsatz 7 aus einem Ventilschaft 8 und dem bereits erwähnten Ventilteller 4 sowie eine Schraubendruckfeder 9, welche den Ventilschaft 8 umgibt und mit ihrem einen Ende am Gehäuse 6 und mit ihrem anderen Ende an der Unterseite des Ventiltellers 4 abgestützt ist. Die Entlüftungseinheit 3 weist eine in ihrer Längserstreckung - diese entspricht in Formsegmenten , die den Laufstreifen ausformen der radialen Richtung im Reifen - verlaufende Mittellängsachse a auf, bezüglich welcher die meisten Bestandteile der Entlüftungseinheit 3 rotationssymmetrisch ausgeführt sind. Die Mittellängsachse a der Entlüftungseinheit 3 ist daher gleichzeitig die Mittellängsachse a des Gehäuses 6 und des Ventileinsatzes 7.

In der nachfolgenden detaillierten Beschreibung einzelner Bestandteile der Entlüftungseinheit 3 wird die Ausgestaltung dieser Bestandteile in Bezug auf ihre Einbaulage im Formsegment 1 bzw. der Position in den Figuren betrachtet, dies betrifft beispielsweise Bezeichnungen wie außen bzw. oben und innen. Die dargestellte Entlüftungseinheit ist beispielhaft eine Entlüftungseinheit mit einem Durchmesser von 3,2 mm, daher eine Entlüftungseinheit für Vulkanisationsformen für PKW-Reifen. Üblicherweise können Entlüftungseinheiten einen Durchmesser (an die Entlüftungsbohrung angepasster Durchmesser) von 2 mm bis 5 mm aufweisen.

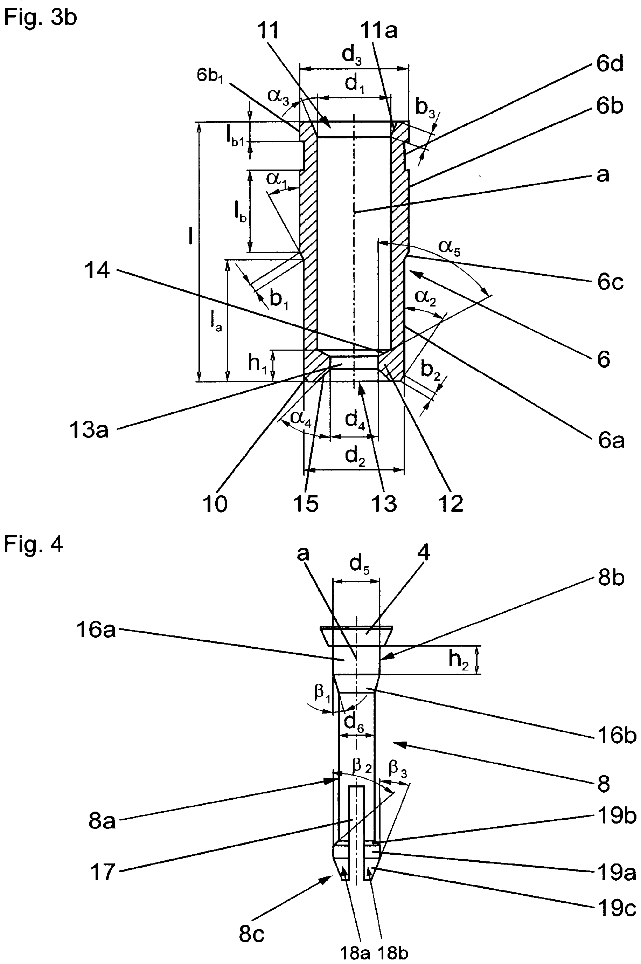

Das in Fig. 3a und 3b separat dargestellte Gehäuse 6 ist im Wesentlichen eine zylindrische Hülse mit einem über den Großteil seiner Erstreckung entlang der Mittellängsachse a konstanten inneren Durchmesser d₁. Das Gehäuse 6 weist an seiner Außenseite einen inneren Abschnitt 6a auf, welcher bis zum innenseitigen Ende des Gehäuses 6 reicht und eine Länge lₐ besitzt, die mindestens 35% der Gehäuselänge l beträgt. Der Abschnitt 6a weist einen Außendurchmesser d₂ auf, welcher um mindestens 0,3 mm, insbesondere um bis zu 0,5mm, geringer ist als der Innendurchmesser des Bohrungsabschnittes 2a. Bei beiden Ausführungsvarianten geht der innere Abschnitt 6a über eine das Gehäuse 6 umlaufende Schrägfläche 6c in einen weiteren Abschnitt 6b über. Der weitere Abschnitt 6b erstreckt sich bei der in Fig. 3a gezeigten Ausführung bis zum äußeren bzw. oberen Ende des Gehäuses 6. Bei der in Fig. 3b gezeigten Ausführung schließt an das obere Ende des Gehäuses 6 ein schmaler Randabschnitt 6_{b₁} an, welcher vom Abschnitt 6b durch einen am Gehäuse 6 umlaufenden, im Querschnitt nutartig ausgestalteten schmalen Abschnitt 6d getrennt ist, wobei der Außendurchmesser des Abschnittes 6d insbesondere dem Außendurchmesser d₂ des inneren Abschnittes 6a entspricht. Der Randabschnitt 6_{b₁} weist eine Länge l_{b₁} von mindestens 1,0 mm auf. Sowohl der Abschnitt 6b (Fig. 3a, Fig. 3b) als auch der Randabschnitt 6_{b₁} (Fig. 3b) weisen einen Außendurchmesser d₃ auf, welcher um 0,3 mm bis 0,5 mm größer ist als der Außendurchmesser des Abschnittes 6a und an den Innendurchmesser des Abschnittes 2a der Entlüftungsbohrung 2 derart angepasst ist, dass der Abschnitt 6b (Fig. 3a) bzw. dieser und der Randabschnitt 6bi (Fig. 3b) in die Entlüftungsbohrung 2 eingepresst werden kann bzw. können. Der Abschnitt 6b bzw. die Abschnitte 6b und 6bₗ erstreckt sich bzw. erstrecken sich insgesamt über eine Länge l_{b} (Fig. 3a) bzw. l_{b} + l_{b₁} (Fig. 3b) von 30% bis 45% der Gehäuselänge 1. Das Gehäuse 6 kann ferner mehr als zwei Abschnitte aufweisen, deren Außendurchmesser in der erwähnten Weise an den Innendurchmesser der Entlüftungsbohrung 2 angepasst ist. Die am Gehäuse 6 zwischen dem inneren Abschnitt 6a und dem anschließenden Abschnitt 6b außenseitig umlaufende Schrägfläche 6c verläuft zur Außenseite des Abschnittes 6b bzw. zur Mittellängsachse a unter einem Winkel α₁ von 10° bis 60°, insbesondere von 15° bis 45°. Die Breite b₁ der Schrägfläche 6c beträgt beispielsweise in der Größenordnung von 0,20 mm bis 0,30 mm.

Eine weitere Schrägfläche 10 mit Neigung nach innen ist außenseitig am inneren Ende des Gehäuses 6 ausgebildet. Die Schrägfläche 10 ist eine Art Fase an der Gehäusekante und verläuft zur Außenseite des Abschnittes 6a bzw. zur Mittellängsachse a unter einem konstanten Winkel α₂, welcher 10° bis 60°, insbesondere 15° bis 45°, beträgt. Die Schrägfläche 10 ist sehr schmal, ihre Breite b₂ beträgt in der Größenordnung von 0,15 bis 0,20 mm.

Am äußeren, der Formsegmentinnenseite 1a zugewandten Endbereich ist das Gehäuse 6 innenseitig mit einer kegelstumpfförmigen Verbreiterung 11 versehen, die an die Ausgestaltung des Ventiltellers 4, welcher, wie es beispielsweise Fig. 2 zeigt, ebenfalls kegelstumpfförmig gestaltet ist, angepasst ist. Die Verbreiterung 11 wird demnach von einer innenseitig am Rand des Gehäuses 6 umlaufenden Schrägfläche 11a gebildet, die zur Mittellängsachse a unter einem Winkel α₃ von 10° bis 45°, vorzugsweise 15° bis 30°, insbesondere 22°, verläuft. Die Breite b₃ der Schrägfläche 11a beträgt in der Größenordnung von 0,5 mm.

An dem der kegelstumpfförmigen Verbreiterung 11 gegenüberliegenden Endbereich des Gehäuses 6 befindet sich ein Gehäuseboden 12, welcher eine mittige kreisrunde Öffnung 13 mit einem zentralen schmalsten Öffnungsabschnitt 13a aufweist, dessen Innendurchmesser d₄ kleiner ist als der Innendurchmesser d₁ des Gehäuses 6 und von einem schmalen Ring umlaufen ist. Oberhalb und unterhalb des Öffnungsabschnittes 13a ist die Öffnung 13 mittels je einer Schrägfläche 14, 15 verbreitert. Die außenseitig am Gehäuseboden 12 verlaufende Schrägfläche 15 verläuft unter einem Winkel von α₄ von 30° bis 60°, insbesondere von etwa 45°, zur Mittellängsachse a. Gehäuseinnenseitig bildet die zweite Schrägfläche 14 bei der gezeigten Ausführung eine Übergangsfläche zur Gehäuseinnenwand und verläuft unter einem Winkel α₅ von 30° bis 70°, insbesondere in der Größenordnung von 60°, zur Mittellängsachse a. Die Höhe h₁ des Gehäusebodens 12 parallel zur Mittellängsachse a beträgt in der Größenordnung von 0,4 mm bis 0,6 mm.

Der Ventileinsatz 7 wird nun anhand der Figuren 2 und 4 näher beschrieben. Fig. 4 zeigt den Ventilschaft 8, welcher sich aus einem über den Großteil seiner Erstreckung verlaufenden, zylindrischen Basisabschnitt 8a mit einem konstanten Durchmesser, einem der Formsegmentinnenseite 1a zugewandten Endabschnitt 8b, auf welchem sich der Ventilteller 4 befindet, und einem der Formsegmentinnenseite abgewandten Endabschnitt 8c zusammensetzt. Der Endabschnitt 8b weist einen an den Ventilteller 4 anschließenden, zylindrischen Halteabschnitt 16a auf, welcher eine Höhe h₂ von 1,0 mm bis 1,5 mm aufweist und dessen Durchmesser d₅ größer ist als der Durchmesser d₆ des Basisabschnittes 8a und an den Innendurchmesser der Schraubendruckfeder 9 derart angepasst ist, dass diese auf den Halteabschnitt 16a fest aufgesteckt werden kann und sich innenseitig am Ventilteller 4 abstützt. Wie Fig. 2 zeigt weist die Schraubendruckfeder 9 an ihrem auf den Halteabschnitt 16a aufsteckbaren Ende zumindest zwei eng beabstandete Windungen 9a auf, deren gegenseitiger Abstand im entspannten Zustand der Schraubendruckfeder 9 höchsten der Hälfte, insbesondere höchstens einem Drittel, des gegenseitigen Abstandes der sonstigen Windungen entspricht. Eine solche "Doppelwindung" kann auch am zweiten Ende der Schraubendruckfeder 9 vorgesehen sein. Der Durchmesser d₆ des Basisabschnittes 8a ist an den Innendurchmesser d₄ des Öffnungsabschnittes 13a im Gehäuseboden 12 angepasst. Der Durchmesser d₆ des Basisabschnittes 8a ist um mindestens 0,3 mm kleiner als der Innendurchmesser der Schraubendruckfeder 9. Zwischen dem Basisabschnitt 8a und dem Halteabschnitt 16a befindet sich ein Zentrierabschnitt 16b, welcher eine am Endabschnitt 8b umlaufende Schrägfläche ist, und zur zentralen Mittellängsachse a unter einem Winkel β₁ von 10° bis 20°, insbesondere in der Größenordnung von 15°, verläuft.

Der zweite Endabschnitt 8c ist mittig durch einen entlang der Mittellängsachse a und in den Basisabschnitt 8a hineinreichenden Schlitz 17 zweigeteilt. Der Schlitz 17 gestattet ein Zusammendrücken bzw. Aufeinanderzubewegen der beiden Endabschnittteile 18a, 18b, sodass der Ventilschaft 8 durch die Engstelle bzw. die Öffnung 13 im umlaufenden Vorsprung 12 des Gehäuses 6 durchgeführt und derart am Gehäuse 6 befestigt werden kann. Jeder Endabschnittteil 18a, 18b bildet einen Vorsprung, welcher gemäß der zylindrischen Schaftform jeweils insgesamt gerundet ist. An seiner breitesten Stelle weist jeder Vorsprung einen Bund 19a auf, welcher über eine Schrägfläche 19b an den Basisabschnitt 8a anschließt. Die Schrägflächen 19b verlaufen unter einem Winkel β₂ von 30° bis 60°, insbesondere von 45°, zur Mittellängsachse a, wobei der Winkel β₂ vorzugsweise dem Winkel α₄ der Schrägfläche 15 bei der Öffnung 13 im Gehäuseboden 12 des Gehäuses 6 entspricht, sodass sich, wie Fig. 2 zeigt, bei eingesetztem Ventilschaft 8 die Schrägfläche 19b an der Schrägfläche 15 des Gehäuses 6 abstützt. Die Endabschnittteile 18a, 18b verjüngen sich in Richtung zum Schaftende und weisen außenseitig Schrägflächen 19c auf, die jeweils unter einem Winkel β₃ von 15° bis 25°, insbesondere von 20°, zur Mittellängsachse a verlaufen und eine Einführhilfe beim Einsetzen des Ventilschaftes 8 in das Gehäuse 6 bilden. Wie Fig. 2 zeigt, befinden sich bei im Gehäuse 6 eingesetztem Ventilschaft 8 die Endabschnitte 18a, 18b unterhalb der Öffnung 13.

Zum Zusammenbauen der Entlüftungseinheit 3 wird die Schraubendruckfeder 9 über dem Ventilschaft 8 positioniert und der Ventilschaft 8 wird unter Zusammendrücken der beiden Endabschnittteile 18a, 18b durch die mittige Öffnung 13 im Vorsprung 12 des Gehäuses geführt und derart am Gehäuse 6 befestigt. Die Schrägflächen 14 oberhalb des Öffnungsabschnittes 13a sowie die Schrägflächen 19c am Ventilschaft 8 ermöglichen ein Einsetzen unter geringem Kraftaufwand.

Bei der in Fig. 2 und Fig. 4 gezeigten Ausführung ist der Ventilteller 4 mit einer ebenen äußeren Oberfläche ausgeführt. An der Oberfläche des Ventiltellers kann jedoch zumindest eine Erhebung und/oder zumindest eine Vertiefung ausgebildet sein, wobei ein etwaiger Oberflächenbereich außerhalb der Erhebung oder Vertiefung eben bleibt. Die Höhe der Erhebung bzw. von Erhebungen, in vertikaler Richtung gegenüber einer den kreisförmigen Rand des Ventiltellers enthaltenden Ebene, sollte vorzugsweise höchsten dem Hub des Ventilschaftes 8 entsprechen. Erhebungen und Vertiefungen können nahezu beliebig gestaltet sein, wobei vorzugsweise die Vertiefung(en) oder Erhebung(en) bezüglich zumindest einer Ebene, welche die zentrale Mittellängsachse a enthält, symmetrisch angeordnet oder ausgebildet ist bzw. sind. Erhebungen oder Vertiefungen können quaderförmig, in Draufsicht sternförmig oder kreisförmig und dergleichen ausgestaltet sein. Erhebungen weisen entweder eine gerundete Oberfläche oder eine äußere Oberfläche auf, die parallel zu der den kreisförmigen Rand des Ventiltellers enthaltenden Ebene verläuft.

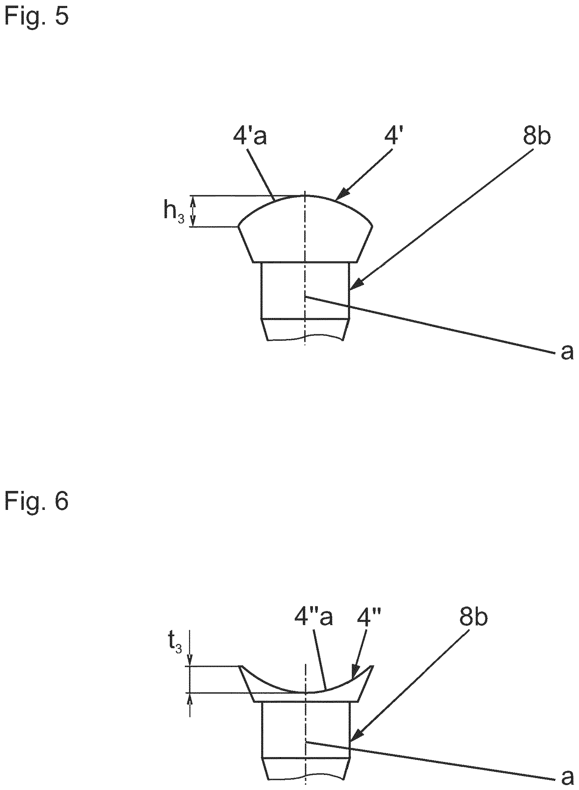

Fig. 5 und Fig. 6 zeigen bevorzugte Ausführungsvarianten von Ventiltellern 4', 4" anhand eines Teilbereiches des Endabschnittes 8a des Ventilschaftes 8. Der Ventilteller 4' gemäß Fig. 5 weist als Erhebung eine Wölbung der gesamten Oberfläche 4'a des Ventiltellers 4' nach außen auf, der Ventilteller 4" gemäß Fig. 6 weist als Vertiefung eine Wölbung der gesamten Oberfläche 4"a nach innen auf. Die Wölbungen können kugelabschnittförmig ausgebildet sein, wobei die Höhe h₃ bzw. Tiefe t₁ des Kugelabschnittes, gegenüber der den kreisförmigen Rand des Ventiltellers enthaltenden Ebene höchstens 30% des Radius der zugrundeliegenden Kugel entspricht und höchstens 0,50 mm beträgt.

Zum einen kann durch eine Erhebung oder mehrere Erhebungen am Ventilteller das Bewegen des Ventiltellers in seine geschlossene Stellung unterstützt werden, zum anderen können durch Erhebungen und/oder Vertiefungen am Ventilteller gezielt lokale Vertiefungen oder Erhebungen am Laufstreifen des Reifens ausgebildet werden, die optisch als weniger störend empfunden werden als die Abdrücke von Ventiltellern mit ebener Oberfläche.

Die Entlüftungseinheit 3 lässt sich auf eine präzise und einfache Weise in den Abschnitt 2a der Entlüftungsbohrung 2 des Formsegmentes 1 einsetzen. Nachdem nur der äußere Abschnitt 6b des Gehäuses 6 in die Entlüftungsbohrung 2 eingepresst wird, wird das Gehäuse 6 mit seinem dünneren Abschnitt 6a in der Entlüftungsbohrung 2 positioniert. Die Schrägfläche 10 am unteren Ende des Abschnittes 6a unterstützt ein einfaches Einsetzen in die Bohrung 2. Dadurch wird es möglich, das Gehäuse 6 auch maschinell einzusetzen ohne eine perfekte Ausrichtung der Vorrichtung, z.B. eines Roboters, zur Bohrung zu haben. Durch den längeren dünneren Abschnitt 6a wird das Gehäuse 6 in der Bohrung 2 vorjustiert und steht im Wesentlichen parallel zur Bohrungsachse, wenn die Schrägfläche 6c mit dem Bohrungsrand in Berührung kommt. Jetzt wird das Gehäuse 6 exakt zentriert und geradegerichtet, damit das Gehäuse 6 dann parallel zur Bohrungsachse eingebracht wird ohne den Bohrungsrand zu beschädigen oder asymmetrisch aufzuweiten. Es wird daher nicht nur eine besonders exakte Positionierung der Entlüftungseinheit 3 in der Entlüftungsbohrung 2 ermöglicht, sondern es ist auch der Kraftaufwand deutlich verringert. Grundsätzlich kann die Entlüftungseinheit 3 komplett aus ihren Teilen zusammengesetzt sein, bevor sie in die Entlüftungsbohrung eingebracht wird. Es ist jedoch auch möglich, zuerst das Gehäuse 6 in die Entlüftungsbohrung 2 einzubringen und dann die weiteren Teile im Gehäuse 6 zu positionieren.

### Bezugsziffernliste

- 1: Formsegment
- 1a: Formsegmentinnenseite
- 2: Entlüftungsbohrung
- 2a: Abschnitt
- 3: Entlüftungseinheit
- 4, 4', 4": Ventilteller
- 5: Laufstreifen
- 6: Gehäuse
- 6b₁: Randabschnitt
- 6a, 6b: Abschnitt
- 6c: Schrägfläche
- 6d: Abschnitt
- 7: Ventileinsatz
- 8: Ventilschaft
- 8a: Basisabschnitt
- 8b, 8c: Endabschnitt
- 9: Schaubendruckfeder
- 9a: Windung
- 10: Schrägfläche
- 11: Verbreiterung
- 11a: Schrägfläche
- 12: Gehäuseboden
- 13: Öffnung
- 13a: Öffnungsabschnitt
- 14, 15: Schrägfläche
- 16a: Halteabschnitt
- 16b: Zentrierabschnitt
- 17: Schlitz
- 18a, 18b: Endabschnittteil
- 19a: Bund
- 19b, 19c: Schrägfläche
- a: Mittellängsachse
- b₁, b₂, b₃: Breite
- d₁, d₂, d₃, d₄, d₅, d₆: Durchmesser
- 1: Gehäuselänge
- 1ₐ, 1_{b}, 1_{b1}: Länge
- α₁, α₂, α₃, α₄, α₅: Winkel (Gehäuse)
- β₁, β₂, β₃: Winkel (Schaft)
- h₁, h₂, h₃: Höhe
- t₁: Tiefe

## Patentansprüche

1. Entlüftungseinheit (3) für eine Vulkanisationsform eines Fahrzeugluftreifens mit einer zentralen Mittellängsachse (a), einem zylindrischen Gehäuse (6) und einem im Gehäuse (6) positionierten und gegenüber diesem beweglichen Ventileinsatz (7), welcher einen Ventilschaft (8) mit einem Ventilteller (4, 4', 4") und eine den Ventilschaft (8) umgebende Schraubendruckfeder (9) aufweist, welche mit ihrem einen Ende am Gehäuse (6) und mit ihrem anderen Ende am Ventilteller (4, 4', 4") abgestützt ist, wobei das Gehäuse (6) durch Presssitz in einer Entlüftungsbohrung (2) der Vulkanisationsform verankerbar ist,
**dadurch gekennzeichnet,**
**dass** das Gehäuse (6) an seiner Außenseite mehrere zylindrische Abschnitte (6b, 6b₁) aufweist, welche sich insgesamt über 30% bis 45% der Gehäuselänge (1) erstrecken und mittels welchen das Gehäuse (6) durch Presssitz in der Entlüftungsbohrung (2) verankerbar ist.

2. Entlüftungseinheit (3) nach Anspruch 1, **dadurch gekennzeichnet, dass** einer der zylindrischen Abschnitte ein am äußeren Ende des Gehäuses (6) umlaufender Randabschnitt (6b₁) ist, dessen Länge (l_{bl}) mindestens mm beträgt.

3. Entlüftungseinheit (3) nach Anspruch oder 2, **dadurch gekennzeichnet, dass** das Gehäuse (6) einen an seinem inneren Ende anschließenden inneren zylindrischen Abschnitt (6a) aufweist, dessen Außendurchmesser geringer ist als der Außendurchmesser jener Abschnitte (6b), mittels welchen das Gehäuse (6) durch Presssitz in der Entlüftungsbohrung (2) verankerbar ist.

4. Entlüftungseinheit (3) nach Anspruch 3, **dadurch gekennzeichnet, dass** der innere zylindrische Abschnitt (6a) eine Länge (lₐ) von mindestens 30% der Gehäuselänge (1) aufweist.

5. Entlüftungseinheit (3) nach einem der Ansprüche 1 bis 4, **dadurch gekennzeichnet, dass** zwischen den durch Presssitz in der Entlüftungsbohrung (2) verankerbaren zylindrischen Abschnitten (6b, 6bₗ) jeweils ein weiterer Abschnitt (6d) vorgesehen ist, dessen Außendurchmesser geringer ist als der Außendurchmesser der äußeren Abschnitte (6b, 6bₗ).

6. Entlüftungseinheit (3) nach einem der Ansprüche 3 bis 5, **dadurch gekennzeichnet, dass** der innere zylindrische Abschnitt (6a) einen um 0,2 mm bis 0,5 mm kleineren Außendurchmesser aufweist als jene Abschnitte (6b), mittels welchen das Gehäuse (6) durch Presssitz in der Entlüftungsbohrung (2) verankerbar ist.

7. Entlüftungseinheit (3) nach einem der Ansprüche 3 bis 6, **dadurch gekennzeichnet, dass** der innere Abschnitt (6a) mit dem unmittelbar anschließenden äußeren Abschnitt (6b) des Gehäuses (6) über eine umlaufende Schrägfläche (6c) verbunden ist, welche zur Mittellängsachse (a) der Entlüftungseinheit (3) unter einem Winkel (α₁) von 10° bis 60°, insbesondere von 15° bis 45°, verläuft.

8. Entlüftungseinheit (3) nach einem der Ansprüche 3 bis 7, **dadurch gekennzeichnet, dass** das innere Ende des inneren Abschnittes (6a) des Gehäuses (6) außenseitig angefast ist und eine Schrägfläche (10) aufweist, die unter einem Winkel (α₂) von 10° bis 60°, insbesondere von 15° bis 45°, zur Mittellängsachse (a) der Entlüftungseinheit (3) verläuft.

## Claims

1. Venting unit (3) for a vulcanizing mould of a pneumatic vehicle tyre, having a central longitudinal mid-axis (a), a cylindrical housing (6) and a valve insert (7), which is positioned in the housing (6) and is movable relative thereto and has a valve shank (8) with a valve disc (4, 4', 4") and has a helical compression spring (9), which surrounds the valve shank (8) and is supported with its one end on the housing (6) and with its other end on the valve disc (4, 4', 4"), it being possible for the housing (6) to be anchored in a venting bore (2) of the vulcanizing mould by a press fit,
**characterized**
**in that** the housing (6) has multiple cylindrical portions (6b, 6b₁) on its outer side which extend altogether over 30% to 45% of the housing length (I) and by means of which the housing (6) can be anchored in the venting bore (2) by a press fit.

2. Venting unit (3) according to Claim 1, **characterized in that** one of the cylindrical portions is a peripheral portion (6b₁), which runs around the outer end of the housing (6) and the length (l_{b1}) of which is at least 1 mm.

3. Venting unit (3) according to Claim 1 or 2, **characterized in that** the housing (6) has an inner cylindrical portion (6a), which adjoins its inner end and the outer diameter of which is smaller than the outer diameter of those portions (6b) by means of which the housing (6) can be anchored in the venting bore (2) by a press fit.

4. Venting unit (3) according to Claim 3, **characterized in that** the inner cylindrical portion (6a) has a length (lₐ) of at least 30% of the housing length (I).

5. Venting unit (3) according to one of Claims 1 to 4, **characterized in that** a further portion (6d) is respectively provided between the cylindrical portions (6b, 6b₁) that can be anchored in the venting bore (2) by a press fit, the outer diameter of which is smaller than the outer diameter of the outer portions (6b, 6b₁).

6. Venting unit (3) according to one of Claims 3 to 5, **characterized in that** the inner cylindrical portion (6a) has an outer diameter that is less by 0.2 mm to 0.5 mm than those portions (6b) by means of which the housing (6) can be anchored in the venting bore (2) by a press fit.

7. Venting unit (3) according to one of Claims 3 to 6, **characterized in that** the inner portion (6a) is connected to the directly adjoining outer portion (6b) of the housing (6) by way of a peripheral sloping surface (6c), which runs at an angle (α₁) of 10° to 60°, in particular of 15° to 45°, in relation to the longitudinal mid-axis (a) of the venting unit (3).

8. Venting unit (3) according to one of Claims 3 to 7, **characterized in that** the inner end of the inner portion (6a) of the housing (6) is beveled on the outer side and has a sloping surface (10), which runs at an angle (α₂) of 10° to 60°, in particular of 15° to 45°, in relation to the longitudinal mid-axis (a) of the venting unit (3).

## Revendications

1. Unité d'aération (3) pour un moule de vulcanisation d'un pneu de véhicule comprenant un axe longitudinal médian central (a), un boîtier cylindrique (6) et un insert de soupape (7) positionné dans le boîtier (6) et mobile par rapport à celui-ci, qui présente une tige de soupape (8) comprenant un disque de soupape (4, 4', 4") et un ressort de pression hélicoïdal (9) entourant la tige de soupape (8), qui s'appuie par une de ses extrémités sur le boîtier (6) et par son autre extrémité sur le disque de soupape (4, 4', 4"), le boîtier (6) pouvant être ancré par ajustement serré dans un alésage d'aération (2) du moule de vulcanisation,
**caractérisée en ce que**
le boîtier (6) présente sur son côté extérieur plusieurs sections cylindriques (6b, 6b₁), qui s'étendent au total sur 30 % à 45 % de la longueur de boîtier (I) et au moyen desquelles le boîtier (6) peut être ancré par ajustement serré dans l'alésage d'aération (2).

2. Unité d'aération (3) selon la revendication 1, **caractérisée en ce que** l'une des sections cylindriques est une section de bord périphérique (6b₁) à l'extrémité extérieure du boîtier (6), dont la longueur (l_{b1}) est d'au moins 1 mm.

3. Unité d'aération (3) selon la revendication 1 ou 2, **caractérisée en ce que** le boîtier (6) présente une section cylindrique intérieure (6a) contiguë à son extrémité intérieure, dont le diamètre extérieur est inférieur au diamètre extérieur des sections (6b) au moyen desquelles le boîtier (6) peut être ancré par ajustement serré dans l'alésage d'aération (2).

4. Unité d'aération (3) selon la revendication 3, **caractérisée en ce que** la section cylindrique intérieure (6a) présente une longueur (lₐ) d'au moins 30 % de la longueur de boîtier (I).

5. Unité d'aération (3) selon l'une quelconque des revendications 1 à 4, **caractérisée en ce qu'**entre les sections cylindriques (6b, 6b₁) pouvant être ancrées par ajustement serré dans l'alésage d'aération (2), une autre section (6d) est prévue respectivement, dont le diamètre extérieur est inférieur au diamètre extérieur des sections extérieures (6b, 6b₁).

6. Unité d'aération (3) selon l'une quelconque des revendications 3 à 5, **caractérisée en ce que** la section cylindrique intérieure (6a) présente un diamètre extérieur inférieur de 0,2 mm à 0,5 mm à celui des sections (6b) au moyen desquelles le boîtier (6) peut être ancré par ajustement serré dans l'alésage d'aération (2).

7. Unité d'aération (3) selon l'une quelconque des revendications 3 à 6, **caractérisée en ce que** la section intérieure (6a) est reliée à la section extérieure (6b) du boîtier (6) directement contiguë par l'intermédiaire d'une surface oblique périphérique (6c), qui s'étend par rapport à l'axe longitudinal médian (a) de l'unité d'aération (3) selon un angle (α₁) de 10° à 60°, notamment de 15° à 45°.

8. Unité d'aération (3) selon l'une quelconque des revendications 3 à 7, **caractérisée en ce que** l'extrémité intérieure de la section intérieure (6a) du boîtier (6) est chanfreinée extérieurement et présente une surface oblique (10), qui s'étend selon un angle (α₂) de 10° à 60°, notamment de 15° à 45°, par rapport à l'axe longitudinal médian (a) de l'unité d'aération (3).
